# EUROPEAN PATENT SPECIFICATION

(11) **EP 3 710 329 B1**
(45) Date of publication and mention of the grant of the patent: **08.01.2025**
(21) Application number: 18800619.1
(22) Date of filing: 09.11.2018
(51) Int. Cl.: B60W 50/16, A45F 5/00, B60W 50/00

(54) **CONTROLLER AND METHOD**
STEUERGERÄT UND VERFAHREN
DISPOSITIF DE COMMANDE ET PROCÉDÉ

(30) Priority: 17.11.2017 GB 201719054
(43) Date of publication of application: 23.09.2020
(73) Proprietor: Jaguar Land Rover Limited, Coventry, Warwickshire CV3 4LF (GB)
(72) Inventor: TRUMAN, Mark, Coventry Warwickshire CV3 4LF (GB)
(74) Representative: Jaguar Land Rover Patents Department
(86) International application number: PCT/EP2018/080732
(87) International publication number: WO 2019/096681

(56) References cited:
- EP-A1- 3 015 335
- EP-A1- 3 239 011
- DE-A1- 102005 032 528
- DE-A1- 102016 216 986
- US-A1- 2015 013 111
- US-B1- 9 493 118

## Description

### TECHNICAL FIELD

The present invention relates to a controller and method. Particularly, but not exclusively, the present invention relates to a controller and method for providing a haptic stimulus to a user during vehicle operation. Aspects of the invention relate to a method, to a controller, to a system, to apparel and to a vehicle.

### BACKGROUND

Riding, driving or operating a vehicle, can be hazardous. Potential hazards include other road users and any obstacles in a driving path of the vehicle. Such hazards may be present in large numbers in busy urban environments. Another hazardous situation is one in which a user is not aware of how close the vehicle is to its operating limits.

There is a desire to communicate information regarding external environmental situations and/or vehicle operational parameters to a user of the vehicle. It is an object of embodiments of the invention to at least partially address this.

### SUMMARY OF THE INVENTION

Aspects and embodiments of the invention provide a method, a controller, a vehicle, apparel, a system and computer software, as claimed in the appended claims.

According to an aspect of the invention, there is provided a method of providing a haptic stimulus to a user during operation of a vehicle, the method comprising:
receiving at least one electrical signal representative of operational information; determining an oscillatory feedback configuration in dependence on said at least one electrical signal; and
outputting a signal to cause a haptic output device to output the determined oscillatory feedback configuration to a user,
wherein said haptic output means is associated with apparel for wearing by the user.

The operational information comprises at least one of:
information relating to an anti-lock braking system; and
information relating to a traction control system.

In some embodiments, said apparel is vehicle apparel. In some embodiments, said vehicle apparel is motorcycle apparel. In some embodiments, said apparel is a garment. In some embodiments, said apparel is a helmet.

In this way, the method provides a user with a haptic stimulus, by means of the oscillatory feedback configuration, during operation of the vehicle, to inform the user of one or both of environmental and vehicle operational information. Advantageously, a haptic stimulus is less distracting than conventional methods of notifying a vehicle user of environmental and/or operational information and allows the user to maximise their attention to driving or otherwise operating the vehicle. This advantageously increases safety for both the driver and other road users.

Optionally, said operational information comprises information relating to one or more sensor such as an accelerometer or gyroscope of the vehicle. Optionally, the information relating to ABS, TCS, accelerometers or gyroscopes may be used to determine a general ABS, TCS, accelerometer or gyroscope factor during said determining. This advantageously means that the user can be provided with operational information pertaining to subsystems and sensors of or on the vehicle, enabling the user to make informed decisions as to adapting their operation of the vehicle to maximise safety.

In some embodiments, said determining comprises comparing said operational information to at least one corresponding threshold value. Optionally, the method comprises inhibiting said outputting, when the operation information is below said threshold value. In this way, instances of providing a haptic stimulus to the user are limited to situations where it is deemed most relevant. This advantageously maximises the attention the user can give to driving or otherwise operating the vehicle, increasing safety for both the driver and for any nearby road users.

In some embodiments, said determining comprises:
determining an overall severity factor value in dependence on said operational information; and
comparing the overall severity factor value to a threshold overall severity factor value.

Optionally, when the severity factor value is below the threshold overall severity factor value, the method comprises inhibiting said outputting. In this way, a number of parameters contributing to said at least one electrical signal is attributed a different degree of relevance, or weighting, to account for relationships between parameters that may be intrinsically linked, and/or to account for the fact that some parameters may be more critical to vehicle performance than others. This advantageously provides the user with an overall indication as to vehicle operation.

In some embodiments, the method comprises receiving at least one electrical signal representative of environmental information. Said environmental information may comprise information indicative of a detected driving hazard. Optionally, said information indicative of a detected driving hazard may be acquired from sensing means, such as one or both of a camera and a radar on the vehicle. This advantageously enables information relating to safety critical events, such as a driving hazard, to be communicated to the user. Optionally, said determining comprises determining a distance between the vehicle and the detected driving hazard. Optionally, wherein said determining comprises determining a severity factor in dependence on one or more characteristics of said detected driving hazard. The one or more characteristics may comprise one or more of: a size of the detected hazard, whether or not the detected hazard is stationary or moving and a location of the detected hazard relative to the vehicle. This enables information relating to safety critical events, such as potential for a collision, to be communicated to the user, advantageously enabling the user to make an informed decision about their operation of the vehicle to avoid a safety critical event.

In some embodiments, said detected driving hazard is an obstacle in a driving path of the vehicle. In some embodiments, said detected driving hazard is an object in a blind spot of the user. The blind spot of the user may be any area proximal to the vehicle which is not normally visible to the user, but is viewable by the user by the user modifying their posture or gaze. In this sense, "normally visible to the user" means visible to the user either directly or in a rear view or side mirror, when the user adopts a normal driving posture. Modifying the user's driving posture or gaze may comprise the user rotating their head or torso slightly and looking over their shoulder.

In some embodiments, said driving hazard comprises a departure of the vehicle from a lane in which the vehicle is travelling. Said sensing means may be arranged to sense a signal indicative of the vehicle departing from its lane. Advantageously, this improves safety during vehicle operation.

In some embodiments, the sensing means may additionally or alternatively comprise a torque sensor for sensing a signal indicative of a steering torque. Optionally, the torque sensor may be arranged on a steering assembly of the vehicle.

In some embodiments, said processing means, which may comprise a processor, determines whether the lane departure is unintentional or whether the sensed signal is indicative of an intentional vehicle manoeuvre initiated by a user. Optionally, said determining comprises determining whether a steering torque exceeds a pre-determined threshold value of steering torque. When it is determined that the steering torque exceeds the pre-determined threshold value of steering torque, said outputting a signal to cause the haptic output device to output the determined oscillatory feedback configuration to the user may be inhibited. Advantageously, this avoids, or at least minimises, distraction of the user during an intentional vehicle manoeuvre.

In some embodiments, said at least one electrical signal indicative of one or both of environmental information and vehicle operational information comprises a user initiated signal. The user may initiate the signal when they wish to initiate, impart or amplify an emotional response of the user. In some embodiments, the user initiated signal may be initiated by the user depressing a button.

In some embodiments, the method comprises outputting at least one of:
a visible notification on a user display; and
an audible notification via a user sound system.

In some embodiments, the user display comprises a head up display on an eye shield of a helmet. In some embodiments, the sound system may comprise a speaker within a helmet. According to another aspect of the invention, there is provided computer software which, when executed by a computer, is arranged to perform a method according to the aspects as above described. In some embodiments, said computer software is stored on a non-transient computer readable medium.

According to yet another aspect of the invention, there is provided a controller for providing haptic stimulus to a user during operation of a vehicle, the controller comprising:
input means for receiving at least one electrical signal indicative of vehicle operational information;
processing means for:
   determining an oscillatory feedback configuration in dependence on the at least one electrical signal;
output means for providing a signal to cause a haptic output means to output the determined oscillatory feedback configuration to the user, and
wherein said haptic output means is associated with apparel for wearing by the user.

The operational information comprises at least one of:
information relating to an anti-lock braking system; and
information relating to a traction control system.

In some embodiments, said apparel is vehicle apparel. In some embodiments, said vehicle apparel is motorcycle apparel. In some embodiments, said apparel is a garment. In some embodiments, said apparel is a helmet.

In this way, the controller can be used to provide a user with a haptic stimulus, by means of the oscillatory feedback configuration, during operation of the vehicle, to inform the user of one or both of environmental and vehicle operational information. Advantageously, a haptic stimulus is less distracting than conventional methods of notifying a vehicle user of environmental and/or operational information and allows the user to maximise their attention to driving or otherwise operating the vehicle. This advantageously increases safety for both the driver other road users.

In some embodiments, said processing means is a processor.

In some embodiments, said haptic output means is a haptic output device. The haptic output device optionally comprises one or more haptic spots. The haptic spots may each comprise a speaker. In some embodiments, the haptic spots are mounted on a frame. The haptic spots may optionally be distributed throughout said apparel, may be vehicle apparel, such as motorcycle apparel. This advantageously allows for the oscillatory feedback configuration to include a spatial pattern. Optionally, the frame comprises a flexible material. The flexible material may be rubber.

In some embodiments, said operational information comprises information relating to one or more sensors such as accelerometers or gyroscopes of the vehicle.

In some embodiments, said one or more signals indicative of operational information comprises at least one of:
an ABS signal, indicative of data obtained by an anti-lock braking subsystem;
a TCS signal, indicative of data obtained by a traction control subsystem
a first signal, indicative of a longitudinal, lateral or vertical acceleration of the vehicle; and
a second signal, indicative of a pitch, roll or yaw angle of the vehicle. Optionally, said processing means is arranged to determine a general ABS, TCS, accelerometer or gyroscope factor based on said information relating to ABS, TCS and one or more accelerometer or gyroscope. This advantageously means that the user can be provided with operational information pertaining to subsystems and sensors of or on the vehicle, enabling the user to make informed decisions as to adapting their operation of the vehicle to maximise control.

Optionally, through inhibiting said outputting when the severity factor value is below the threshold overall severity factor value, a number of parameters contributing to the at least one electrical signal is attributed a different degree of relevance, or weighting, to account for relationships between parameters that may be intrinsically linked, and/or to account for the fact that some parameters may be more critical to vehicle performance than others. This advantageously provides the user with an overall indication as to vehicle operation.

In some embodiments, the controller comprises input means for receiving at least one electrical signal (305) indicative of environmental information. Said environmental information may comprise presence of a driving hazard. Optionally, said processing means is arranged to determine a distance between said driving hazard and the vehicle. Optionally, said processing means is arranged to determine a severity factor in dependence on one or more characteristics of said driving hazard. The one or more characteristics may comprise one or more of: a size of the detected hazard, whether or not the detected hazard is stationary or moving and a location of the detected hazard relative to the vehicle. This enables information relating to safety critical events, such as potential for a collision, to be communicated to the user, advantageously enabling the user to make an informed decision about their operation of the vehicle to avoid or otherwise manage a safety critical event.

In some embodiments, said detected driving hazard is an obstacle in a driving path of the vehicle. In some embodiments, said detected driving hazard is an object in a blind spot of the user. The blind spot of the user may be any area proximal to the vehicle which is not normally visible to the user, but is viewable by the user by the user modifying their posture or gaze. In this sense, "normally visible to the user" means visible to the user either directly or in a rear view or side mirror, when the user adopts a normal driving posture. Modifying the user's driving posture or gaze may comprise the user rotating their head or torso slightly and looking over their shoulder.

In some embodiments, said at least one electrical signal indicative of one or both of environmental information and vehicle operational information comprises a user initiated signal. The user may initiate the signal when they wish to initiate, impart or amplify an emotional response of the user. In some embodiments, the user initiated signal may be initiated by the user depressing a button.

According to another aspect of the invention, there is provided a vehicle comprising the controller as above described.

According to still another aspect of the invention, there is provided apparel comprising:
haptic output means; and
means for receiving a signal from the controller to instruct the haptic output means to output an oscillatory feedback configuration.

In this way, the apparel can be used to provide a user with a haptic stimulus, by means of the oscillatory feedback configuration, to inform the user of one or both of environmental and vehicle operational information. Advantageously, a haptic stimulus is less distracting than conventional methods of notifying a vehicle user of environmental and/or operational information and allows the user to maximise their attention to driving or otherwise operating the vehicle. This advantageously increases safety for both the driver and other road users.

In some embodiments, said apparel is vehicle apparel. In some embodiments, said vehicle apparel is motorcycle apparel. In some embodiments, the apparel may be a garment, an accessory or a protective clothing. The apparel may be a suit, a jacket, trousers, armour, a back protector, footwear, or any combination thereof. A vehicle user, such as a motorcycle user is likely to wear apparel, which may include protective clothing, regardless of the situation. By incorporating haptic output means and signal receiving means into protective clothing that would normally be worn by the user, this advantageously minimises any additional equipment required.

In some embodiments, the haptic output means may comprise one or more haptic spots. The haptic spots may each comprise a speaker. In some embodiments, the haptic spots are mounted on a frame. The haptic spots may optionally be distributed throughout said apparel, which advantageously allows for the oscillatory feedback configuration to include a spatial pattern. Optionally, the frame is flexible. In an example, the frame is rubber.

According to another aspect of the invention, there is provided a haptic feedback system for a vehicle, the haptic feedback system comprising:
a controller as above described; and
apparel as above described.

In this way, the haptic feedback system provides a user with a haptic stimulus, by means of the oscillatory feedback configuration, during operation of the vehicle, to inform the user of one or both of environmental and vehicle operational information. Advantageously, a haptic stimulus is less distracting than conventional methods of notifying a vehicle user of environmental and/or operational information and allows the user to maximise their attention to driving or otherwise operating the vehicle. This advantageously increases safety for both the driver and other road users.

In some embodiments, said apparel is vehicle apparel. In some embodiments, said vehicle apparel is motorcycle apparel. In some embodiments, said apparel is a garment.

Optionally, the haptic feedback system comprises means for providing wireless communication between the controller and the haptic output means of the apparel. Said means may be Bluetooth^{®}, although any other wireless protocol may be used.

In some embodiments, the haptic feedback system comprises a head up display. Optionally, the head up display is provided on an eye shield or visor of a safety helmet. Advantageously, this allows for information, such as environmental and/or vehicle operational information to be communicated to the user in a plurality of sensory ways, namely, through touch and sight. This advantageously helps to ensure that the user is well aware of the information.

In some embodiments, the haptic feedback system comprises a sound system. The sound system may be provided in a safety helmet. Advantageously, this allows for information, such as environmental and/or vehicle operational information to be communicated to the user in a plurality of sensory ways, namely, through touch and hearing. This advantageously helps to ensure that the user is well aware of the information.

In some embodiments, the haptic feedback system comprises both a head up display as above described and a sound system as above described. Advantageously, this allows for information, such as environmental and/or vehicle operational information to be communicated to the user in a plurality of sensory ways, namely, through touch, sight and hearing. This advantageously helps to ensure that the user is well aware of the information.

According to still another aspect of the invention, there is provided a haptic feedback system comprising:
the vehicle comprising a controller as above described; and
apparel as above described.

In this way, the haptic feedback system provides a user with a haptic stimulus, by means of the oscillatory feedback configuration, during operation of the vehicle, to inform the user of one or both of environmental and vehicle operational information. Advantageously, a haptic stimulus is less distracting than conventional methods of notifying a vehicle user of environmental and/or operational information and allows the user to maximise their attention to driving or otherwise operating the vehicle. This advantageously increases safety for both the driver and other road users.

In some embodiments, said apparel is vehicle apparel. In some embodiments, said vehicle apparel is motorcycle apparel. In some embodiments, said apparel is a garment.

Optionally, the haptic feedback system comprises means for providing wireless communication between the controller and haptic output means of the apparel. Said means may be Bluetooth^{®}, although any other wireless protocol may be used.

In some embodiments, the haptic feedback system comprises a head up display. Optionally, the head up display is provided on an eye shield or visor of a safety helmet. Advantageously, this allows for information, such as environmental and/or vehicle operational information to be communicated to the user in a plurality of sensory ways, namely, through touch and sight. This advantageously helps to ensure that the user is well aware of the information.

In some embodiments, the haptic feedback system comprises a sound system. The sound system may be provided in a safety helmet. Advantageously, this allows for information, such as environmental and/or vehicle operational information to be communicated to the user in a plurality of sensory ways, namely, through touch and hearing. This advantageously helps to ensure that the user is well aware of the information.

In some embodiments, the haptic feedback system comprises both a head up display as above described and a sound system as above described. Advantageously, this allows for information, such as environmental and/or vehicle operational information to be communicated to the user in a plurality of sensory ways, namely, through touch, sight and hearing. This advantageously helps to ensure that the user is well aware of the information.

Within the scope of this invention it is expressly intended that the various aspects, embodiments, examples and alternatives set out in the preceding paragraphs, in the claims and/or in the following description and drawings, and in particular the individual features thereof, may be taken independently or in any combination within the scope of the claims. That is, all embodiments and/or features of any embodiment can be combined in any way and/or combination within the scope of the claims, unless such features are incompatible.

### BRIEF DESCRIPTION OF THE DRAWINGS

One or more embodiments of the invention will now be described by way of example only, with reference to the accompanying drawings, in which:
Figure 1 shows a schematic view of a haptic feedback device;
Figure 2A shows a perspective view of a back protector comprising a haptic feedback device;
Figure 2B shows a front view and a perspective view of a base armour layer of a multilayer motorcycle suit comprising the back protector of Figure 2A;
Figure 3 shows a head up display screen;
Figure 4 shows a schematic diagram of interactions within a haptic feedback system operating in a "safety mode", the system comprising the haptic feedback device of Figure 1;
Figures 5A to 5G show activation of one or more haptic spots in dependence on a relative position of a hazard;
Figure 6 shows a schematic diagram of interactions within a haptic feedback system operating in a "sport mode", the system comprising the haptic feedback device of Figure 1;
Figure 7 shows a plot of haptic notification intensity in dependence on magnitude of various vehicle related factors; and
Figure 8 shows a plot of haptic notification intensity in dependence on magnitude of an overall severity factor.

### DETAILED DESCRIPTION

A method of providing a haptic stimulus to a user during vehicle use comprises receiving at least one electrical signal representative of one or both of environmental information and operational information. The electrical signal may comprise a signal obtained from sensing means, such as a system comprising one or both of a camera and a radar. In some embodiments, sensing means additionally or alternatively comprises a sensor such as an accelerometer or gyroscope on the vehicle. In some embodiments, the vehicle is provided with an inertial movement unit or IMU (not shown) which may comprise a six-axis sensor. The six-axis sensor comprises three gyroscopes for determining respectively, pitch, roll and yaw angle and angular rate of the vehicle and three accelerometers for determining respectively, longitudinal, lateral and vertical acceleration for the vehicle. Other sensors are useful. In dependence on the sensed signal, an oscillatory feedback configuration is determined. Determining the oscillatory feedback configuration may be achieved by means of a processing means. The processing means may be a processor. A memory means, such as a non-transient computer readable medium may store one or more algorithms for use in determining the oscillatory feedback configuration. In some embodiments, the oscillatory feedback configuration is an oscillatory feedback pattern. The oscillatory feedback pattern may be a temporal distribution of feedback, a spatial distribution of feedback or a combination of both temporal and spatial distribution of feedback. In dependence on the determined oscillatory feedback configuration, a signal is output, to cause haptic output means, such as a haptic device, to output the determined oscillatory feedback configuration to a user of the vehicle. The haptic output means is part of, integral with, or otherwise associated with apparel for wearing by the user. The apparel may comprise vehicle apparel, such as a racing suit, a safety helmet, footwear or motorcycle apparel. In this way, the method is suitable for providing the user with a haptic stimulus, by means of the oscillatory feedback configuration, during operation of the vehicle, to inform the user of one or both of environmental and vehicle operational information.

An oscillatory feedback system comprises a vehicle and controlling means, such as a controller. In some embodiments, the system may further include apparel comprising haptic output means, such as a haptic device. The apparel may comprise vehicle apparel, such as a racing suit, a safety helmet, footwear or motorcycle apparel. The controlling means is arranged to control provision of oscillatory feedback to a user, via the haptic output means, during operation of the vehicle.

In some embodiments, when the controlling means is a controller, the controller comprises input means for receiving one or more signals indicative of one or both of environmental and vehicle operational information, processing means for determining an oscillatory feedback configuration in dependence on the one or more signals and output means to provide a signal to instruct the haptic output means to output the determined oscillatory feedback configuration to the user. The processing means may be a processor. In some embodiments, the controller comprises a memory means, such as a non-transient computer readable medium, which memory means may store one or more algorithms for use in determining the oscillatory feedback configuration. In some embodiments, the oscillatory feedback configuration is an oscillatory feedback pattern, such as a temporal distribution of feedback, a spatial distribution of feedback or a combination of both temporal and spatial distribution of feedback. The haptic output means is part of, integral with, or otherwise associated with apparel for wearing by a user so that in use, the oscillatory feedback system provides the user with a haptic stimulus, by means of the oscillatory feedback configuration, to inform the user of environmental and/or vehicle operational information. The apparel may comprise vehicle apparel, such as a racing suit, a safety helmet, footwear or motorcycle apparel.

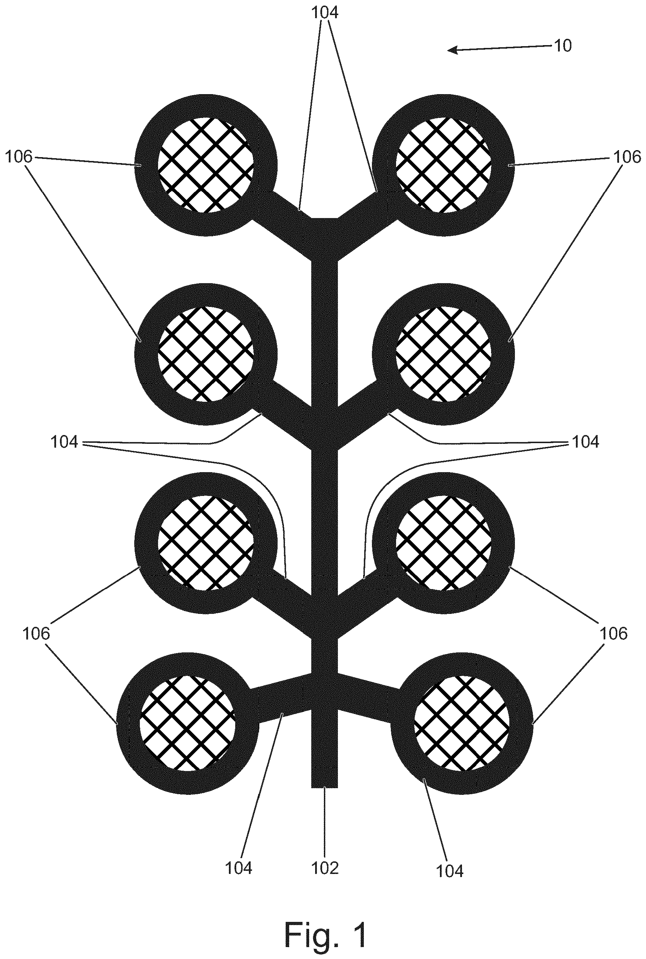

With reference to Figure 1, the haptic output means is a haptic device 10. The haptic device 10 comprises a plurality of, such as four, arms 104 extending from a spine 102 to the left of the spine and a plurality of, such as four, arms 104 extending from the spine 102 to the right of the spine 102, as illustrated. A haptic spot 106 is provided at an end of each arm 104, distal from the spine. The spine 102 and arms 104 together define a frame for supporting the haptic spots 106. Some or all of the arms 104 and/or the spine 102 may be formed of rubber, plastic, or another flexible material. Although eight arms 104 in a symmetrical distribution are described and shown in Figure 1, it is to be appreciated that any number of arms may be provided in any distribution, symmetrical or asymmetric and indeed any number of haptic spots 106 may be provided along or at the end of each arm 104. A suitable device may be obtained from Somato Inc., although other devices may be used. In other embodiments, the haptic device 10 need not include a frame defined by spine 102 and arms 104, but may simply comprise one or more haptic spots 106, communicable with the controller. In use, the haptic feedback device 10 is worn by a user, on or proximal to the user's skin. Proximal in this sense means close enough to the user's skin that the user can still sense oscillatory feedback outputted from the haptic device 10.

The haptic spots 106 each comprise an oscillatory feedback means which may be in the form of an audio speaker, for outputting oscillatory feedback. The haptic feedback device 10 comprises an actuator (not shown) in communication with the haptic spots 106. The actuator is operable so as to generate, in a speaker, a vibration of a predetermined frequency. Each of the at least one haptic spots 106 are individually operable, resulting in a large number of configurations of single or multiple haptic spots 106 that can be individually, successively, or simultaneously driven to provide a user with many different oscillatory feedback configurations, thereby conveying environmental and/or vehicle operational information by a haptic stimulus.

The haptic device 10 is wirelessly communicable with a vehicle to be used in combination with the haptic device 10. In some embodiments, the haptic device 10 is wirelessly communicable with one or more sensing means, (such as one or more of a sensor, a radar camera system, an electronic sub system) on the vehicle. The haptic device 10 may be in communication with said one or more sensing means either directly, or indirectly, by communicating with an electronic control unit (ECU) of the vehicle. One suitable wireless communication means that may be used is Bluetooth^{®}, although other wireless communication protocols may be used. The haptic device 10 includes a power source (not shown), such as one or more rechargeable batteries.

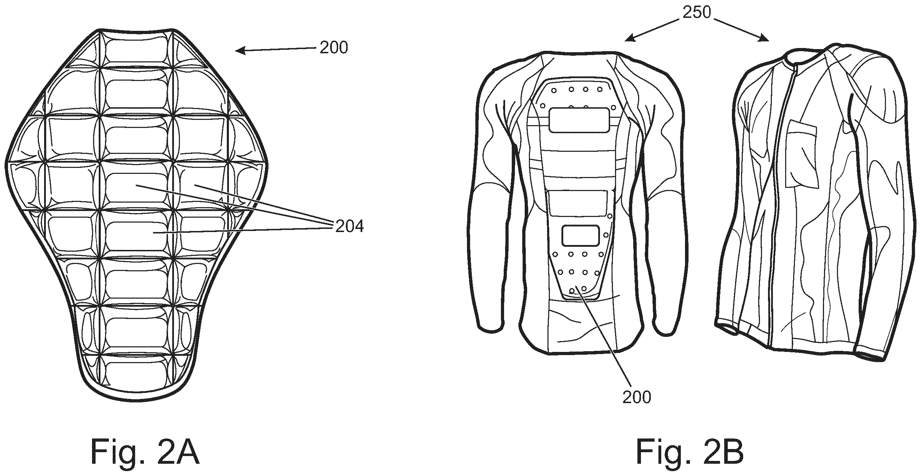

In some embodiments, the haptic feedback device 10 is incorporated in apparel for wearing by a user. The haptic feedback device 10 may be incorporate in a (or part of a) protective apparel or garment, such as a protective pad, or a vehicle suit, such as a motorcycle suit or a racing suit, a safety helmet such as a motorcycle helmet or cycling helmet, or footwear. Racing suits and motorcycle apparel may be made substantially from leather, abrasion resilient fabric, or a fireproof fabric. With reference to Figure 2A, the haptic device (not visible in Figure 2A) is integrated in a back protector 200. The back protector 200 comprises a plurality of segments 204, each defining a pocket of padding to provide the user with protection whilst riding a vehicle. Each of the one or more haptic spots 106 is housed within a respective pocket of a segment 204 and replaces some or all of the padding therein. Surprisingly, little to no compromise on protection conferred by the back protector 200 to the user is observed. The integration of haptic device 10 within the back protector 200 is such that wireless communication between the haptic device 10 and vehicle is still enabled.

Figure 2B shows a base "armour" layer 250 of a multilayer protective vehicle suit, comprising the back protector 200 of Figure 2A, integrated therein. The haptic device 10 is typically arranged so as to be proximal to the user's skin, such as directly in contact with the user's skin or under garments, or separated therefrom only by a relatively thin layer or layers of material. The layer or layers of material should be thin enough that the user can still sense oscillatory feedback output from the haptic device 10. In some embodiments, if the multilayer protective vehicle suit is a motorcycle suit, it additionally comprises a mid-layer (not shown) worn on top of the base layer 250, to provide thermal protection to the user and an abrasion resistant outer skin (not shown) to protect the under layers and the user from weather and to provide the suit with an aesthetically pleasing appearance.

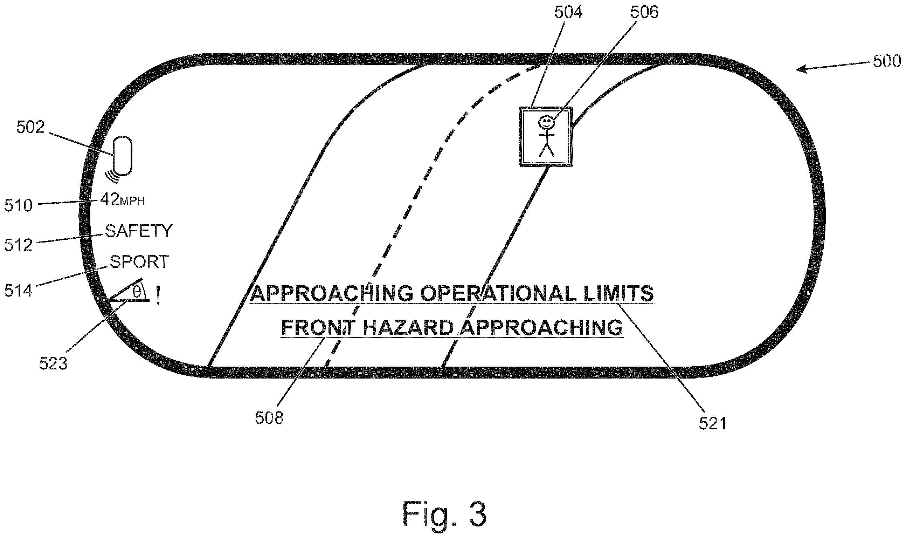

When the vehicle is a motorcycle or a racing car, in some embodiments, the haptic feedback system comprises a helmet, wirelessly communicable with the motorcycle or racing car. The helmet is wirelessly communicable with one or more sensing means, (such as one or more of a sensor, a radar camera system, an electronic sub system) on the vehicle. The helmet may be in communication with said one or more sensing means either directly, or indirectly, by communicating with an electronic control unit (ECU) of the vehicle. Bluetooth^{®} is one suitable means for providing a wireless communication between the motorcycle or racing car and the helmet, although other wireless communication protocols may be used. In some embodiments, the helmet comprises at least one of a head up display in an eye shield of the helmet and an audio system arranged to provide audio feedback to a user wearing the helmet. In some embodiments, the audio system comprises a speaker within the helmet. The head up display is arranged to provide visual feedback about one or both of the user's external environment and vehicle operational information superimposed over the user's normal field of view. Figure 3 shows a head up display 500 of one embodiment. Superimposed information is provided at 502, 504, 508, 510, 512 and 514. In this way, oscillatory feedback configurations may be accompanied by one or both of a visible notification on a user display and an audible notification via the audio system within the helmet.

The haptic feedback system is operable so as to function in a number of different modes. The modes include at least one of a safety mode, a sport mode and a euphoric mode. In some embodiments, each mode is initially disabled or switched off in a default configuration of the haptic feedback system. The modes can then be enabled by a user pressing a button on a vehicle or on apparel. Depression of the button may send a signal to the haptic feedback system to enable one or more modes. Alternatively, or additionally, one or more of the modes may be enabled automatically, in response to one or more sensing means on any one of or combination of the vehicle, apparel and a helmet worn by the user, detecting a particular environment or situation. A single mode may be enabled or multiple modes may simultaneously be enabled.

Embodiments of safety mode, sport mode and euphoric mode will now be described, with reference to use with a compatible motorcycle. Although the embodiments described hereinafter are with reference to a motorcycle, it will be appreciated that embodiments of the invention may instead comprise any one of a variety of other vehicles, such as a racing car, a quad bike or all terrain vehicle (ATV), a tricycle or a bicycle. Although the embodiments described hereinafter are with reference to motorcycle apparel, it will be appreciated that embodiments of the invention may instead comprise any one of a variety of other apparel. The apparel may be an item of clothing, which clothing may, in some embodiments, be wearable under a vehicle suit. Other apparel may, in some embodiments, comprise protective apparel, such as a racing suit.

### Safety mode:

Motorcycle operation can be hazardous for a user, particularly in built up, busy, urban environments. In busy settings, motorcycle drivers (and indeed drivers of any vehicle type), can sometimes miss hazards that are in plain sight, due to an overload of information in a scene in front of them. Hazards in front of a motorcycle, "front hazards", such as a pedestrian crossing the road or a car pulling out ahead, can easily be missed when a user takes even just a few moments to perform another task, such as changing a radio channel, or looking at a speedometer of the vehicle. So called "cognitive blindness" may also be a problem, if a driver is more focused on a task at hand or an internal thought than the road ahead, causing the driver to miss front hazards.

Hazards behind a motorcycle, "rear hazards" are also a concern of motorcycle users. Conventionally, motorcycle users are advised to repeatedly check over their shoulder for rear hazards. When making a right turn at a junction, drivers are required to give way. In that scenario, an impatient driver of another vehicle, such as a car or van, approaching a motorcycle from behind, may attempt to undertake the motorcycle. This can take a user of the motorcycle by surprise and, if timed badly, may result in the other vehicle knocking the motorcycle user off the motorcycle. Safety helmets such as motorcycle helmets, provide a key piece of safety equipment, but repeatedly performing an over the shoulder check may lead to the motorcycle user developing a strained neck, which may become tiresome. In some situations, a motorcycle driver may miss potential hazards, or might simply forget to perform the check before making a turn.

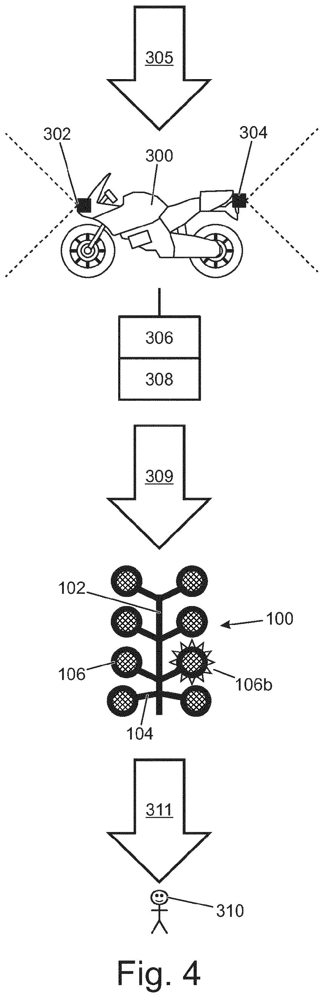

"Safety mode" advantageously provides a user with notification based haptic feedback about potential hazards in the user's environment by providing a haptic stimulus. The haptic stimulus may be provided by means of a corresponding oscillatory feedback configuration. With reference to Figure 4, motorcycle 300 comprises sensing means 302, 304 for sensing one or more signals indicative of environmental information, such as presence of a hazard. In some embodiments, sensing means 302, 304 comprise a forward facing system 302 comprising one or both of a camera and a radar and a rear facing system 304, comprising one or both of a cape camera and a radar. The front and rear systems 302, 304 are suitable for sensing one or more signals 305 indicative of the presence of a hazard. Processing means, which, in some embodiments comprises a processor 306, receives the one or more signals 305. In response to the one or more sensed signals 305, the processing means 306 determines whether a hazard is indeed present and the processing means 306 computes a position and distance of the hazard relative to the motorcycle 300. The processing means 306 determines an oscillatory feedback configuration 311 in dependence on the computed position and distance of the hazard. In response thereto, a signal output means, which in some embodiments comprises an electronic control unit (ECU) 308, outputs a signal 309 to cause the actuator (not shown) to operate the haptic output means 10 by driving one or more of the haptic spots 106, so as to provide the motorcycle user 310 with the determined oscillatory feedback configuration 311. The oscillatory feedback configuration 311 therefore provides the user 310 with a haptic stimulus indicative of the detected hazard.

It will be appreciated that a variety of oscillatory feedback configurations 311 indicative of a detected hazard may be used. In some embodiments, either left or right haptic spot(s) 106 are driven, depending on whether a hazard is to the left or to the right of the motorcycle 300. In some embodiments, the oscillatory feedback configuration 311 increases or decreases in intensity and/or frequency as the hazard becomes respectively closer to or further from the motorcycle 300.

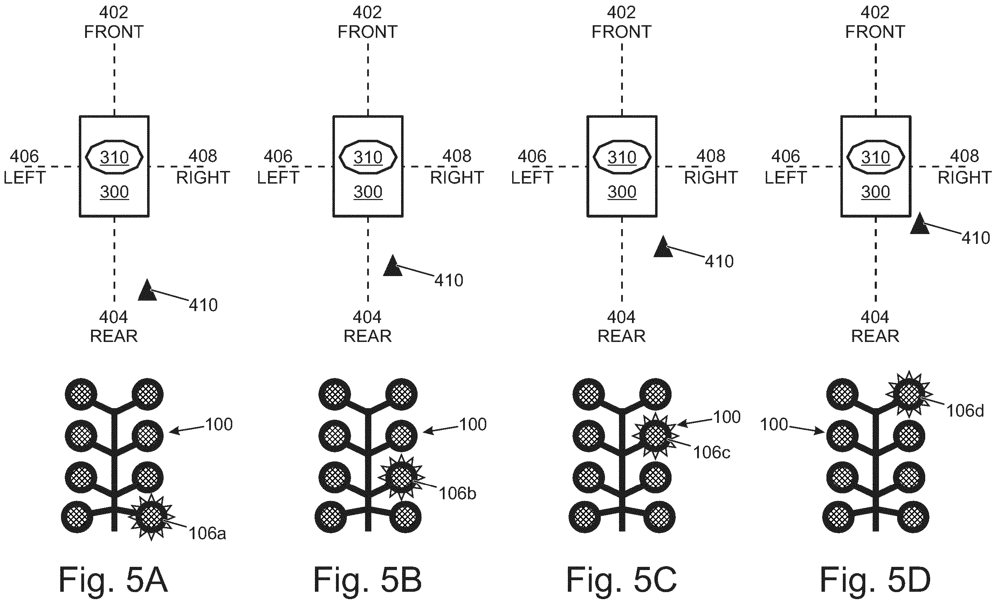

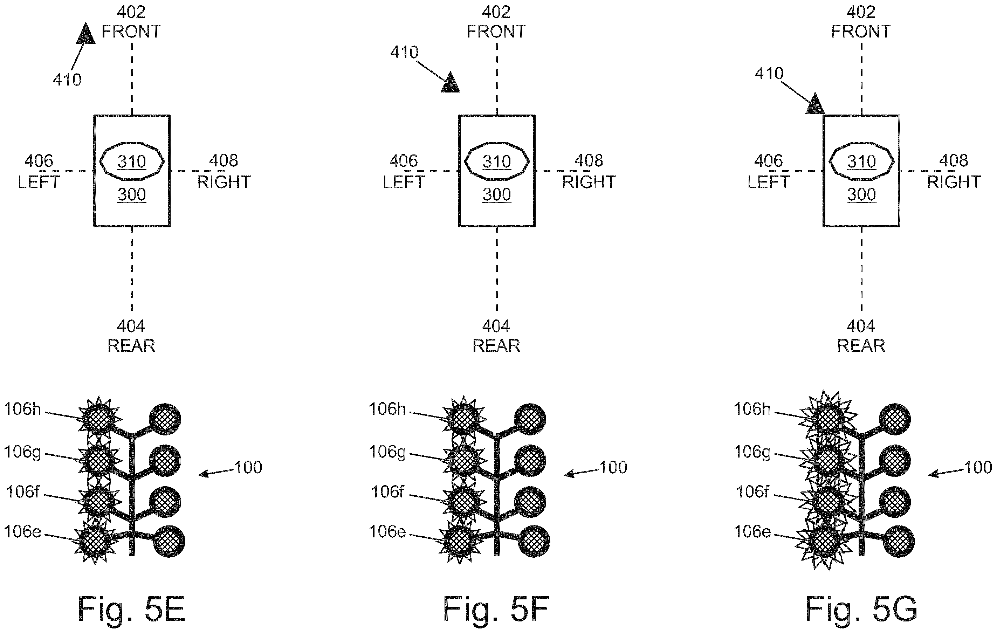

With reference to the embodiment shown in Figures 5A to 5D, proximity of a detected hazard 410 to the motorcycle 300 is communicated to the user 310 by providing an oscillatory feedback configuration 311 that mimics a tap-like gesture. The tap-like gesture is provided by driving a haptic spot 106 in a corresponding vertical position on the haptic output means 10 multiple times, in quick succession. When the haptic output means 10 is provided as part of a back protector, or on a back of a protective vehicle suit, or other apparel to be worn over the back of the user, this results in the tap-like gesture being received on the user's back. In some embodiments, the tap-like gesture may start at, say, one tap per second. The frequency of taps per second may increase with increasing proximity of the detected hazard 410. In some embodiments, proximity of the detected hazard 410 may additionally or alternatively be communicated to the user 310 by means of driving different haptic spots 106 up the user's back. That is, the tap-like gesture may additionally or alternatively move up the user's back by first driving a lowermost haptic spot 106a, then, as the detected hazard 410 becomes closer to the motorcycle 300, a lower medial haptic spot 106b may instead be driven. As the detected hazard 410 becomes yet closer to the motorcycle 300, the tap like gesture is instead provided by driving an upper medial haptic spot 106c. Finally, as the detected hazard 410 reaches a critical proximity to the motorcycle 300, an uppermost haptic spot 106a instead provides the tap like gesture.

In addition to or alternatively, in some embodiments, a relative position of the detected hazard 410 may be communicated to the user 310. When a rear 404 hazard 410 is detected to the right 408 of the motorcycle 300, relatively distal from the user 310, the determined oscillatory feedback configuration 311 is provided by actuation of the lowermost right haptic spot 106a. The user 310 will understand that this gesture indicates that a distal rear 404 hazard 410 to the right 408 of the user 310 is present (as shown in Figure 5A). As the distance between hazard 410 and motorcycle 300 decreases, the lower middle right haptic spot 106b and the upper middle right haptic spot 106c are successively driven, as shown in Figures 5B and 5C, indicating to the user that the distance between the hazard 410 and the vehicle 300 is decreasing. Turning to Figure 5D, as the rear 404 right 408 hazard 410 approaches a critical proximal point, the uppermost right haptic spot 106d is driven. The user 310 will understand that the rear right hazard is proximal to the rear of the motorcycle 300 and action may need to be taken to avoid an accident. It will therefore be appreciated that, as the rear 404 hazard 410 approaches the user 310 (or indeed vice versa), single haptic spots 106 are successively individually driven from a lower vertical position to an upper vertical position on the haptic output means 10. In other words, the tap-like gesture moves up the haptic output means 10 and therefore correspondingly up a back of the user 310 wearing motorcycle apparel, associated with the haptic output means 10, on their back. An increasing speed of movement of the tap-like gesture up the user's back is associated with and may be proportional to a speed at which the detected hazard 410 is approaching the motorcycle 300. In this way, the haptic feedback system may provide blind spot monitoring.

When a front 402 hazard is detected, the motorcycle user 310 is provided with an oscillatory feedback configuration 311 indicative thereof, the configuration 311 being clearly distinguishable from any configuration 311 indicative of a rear 404 hazard. Turning now to Figure 5E to 5G, all left haptic spots 106e, 106f, 106g, 106h are driven simultaneously to provide an oscillatory feedback configuration 311 in response to a front 402 hazard 410 that is detected to the left 406 of the motorcycle 300. As the hazard 410 becomes closer to the motorcycle 300, i.e. as the distance between the front hazard 410 and the motorcycle 300 decreases, the intensity of the oscillatory feedback configuration 311 indicative of a front 402 hazard 410 correspondingly increases, as shown in Figures 5E to 5G.

When the haptic feedback system comprises a motorcycle helmet, in some embodiments, the user is simultaneously provided with audio and/or visual feedback in addition to the haptic stimulus provided by oscillatory feedback configurations, hereinbefore described. In some embodiments, the audio signal simply comprises an audible alarm or a noise that the user associates with the presence of a hazard. In other embodiments, the audio signal comprises a verbal signal specifying the location and proximity of the detected hazard, using phrases such as "rear left hazard detected", "front right hazard approaching", or simply "rear hazard". The audio signal may comprise a more specific verbal warning, such as "front left hazard detected approximately N feet ahead", where N feet is the distance between the detected hazard and the motorcycle. A verbal warning may be accompanied by an audible alarm or noise. The visual feedback comprises information displayed on a head up display on an eye shield of the helmet, such that the displayed information is superimposed over a user's normal field of view. With reference to Figure 3, in some embodiments, the visual signal for a rear hazard comprises a symbol 502 on the head up display 500, positioned to be superimposed on the right or left of the user's field of view. The visual symbol 502 might be a hazard symbol or a motif. In some embodiments, a detected front hazard 506, such as a pedestrian, may be highlighted in the user's view by a box 504 around the detected hazard. The box may flash as distance between the hazard and the motorcycle decreases. In some embodiments, the box 504 is a colour associated with severity, such as red or orange. This visual warning 504 may be accompanied by warning text 508. The head up display 500 may also provide a user with a variety of other environmental and/or operational information, such as a speed indication 510 and indications 512, 514, as to which modes, if any, are enabled.

In some embodiments, safety mode advantageously provides a user with a lane departure notification comprising a haptic stimulus. The haptic stimulus may be provided by means of a corresponding oscillatory feedback configuration. The lane departure notification may warn the user 310 of that the vehicle 300 is departing from a lane in which the vehicle 300 is travelling.

Said sensing means 302, 304 may be arranged to sense a signal 305, which signal 305 is indicative of the vehicle 300 departing from its lane. In some embodiments, sensing means comprises a forward facing system 302 comprising one or both of a camera and a radar. The sensing means may additionally or alternatively comprise a rear facing system 304, comprising one or both of a cape camera and a radar. In some embodiments, the front and rear systems 302, 304 are arranged for sensing a signal 305 indicative of a road marking, which road marking may indicate a boundary of a lane. In some embodiments, the sensing means may additionally or alternatively comprise a torque sensor (not shown) for sensing a signal 305 indicative of a steering torque. The torque sensor may be arranged on a steering assembly of the vehicle 300.

Processing means, which, in some embodiments comprises a processor 306, receives the one or more signals 305. In response to the one or more sensed signals 305, the processing means 306 determines whether the vehicle 300 is departing from its lane. The processing means 306 determines an oscillatory feedback configuration 311 in dependence on the determined lane departure. In response thereto, a signal output means, which in some embodiments comprises an electronic control unit (ECU) 308, outputs a signal 309 to cause the actuator (not shown) to operate the haptic output means 10 by driving one or more of the haptic spots 106, so as to provide the user 310 with the determined oscillatory feedback configuration 311. The oscillatory feedback configuration 311 therefore provides the user 310 with a haptic stimulus indicative of lane departure of the vehicle 300.

The processing means 306 may additionally be arranged to determine whether the lane departure is unintentional or whether in fact, the signal 305 is indicative of an intentional vehicle manoeuvre initiated by the user 310. In some embodiments, said determining comprises determining whether a steering torque exceeds a pre-determined threshold value of steering torque. The haptic stimulus may be inhibited when it is determined that the steering torque exceeds the pre-determined threshold value of steering torque. This may avoid distracting the user 310 during intentional vehicle manoeuvres.

Safety mode as hereinbefore described may be activated by a user and/or may be activated automatically, upon the haptic feedback system detecting one or more predetermined condition parameters. In some embodiments, a user may activate safety mode by pressing a button on the motorcycle, on the motorcycle apparel or on the helmet, which button causes a signal to be sent to the ECU to enable safety mode and initiate wireless communication between the vehicle and the haptic feedback device 10. Alternatively, or additionally, the user may enable safety mode by means of a verbal command detected by a microphone on the helmet in communication with the haptic feedback system. In other embodiments, the motorcycle apparel may comprise sensing means, such as pressure sensors, accelerometers and/or gyroscopes, in communication with the haptic feedback system and the user may enable safety mode by means of a physical gesture.

In some embodiments, the ECU 308 and processing means 306 may continually monitor signals 305 and safety mode may be enabled automatically when the processing means 306 determines that the motorcycle is in a particular setting, such as, an urban scene. An urban scene may be detected by means of one or more sensing means 302, 304 on the motorcycle detecting numerous hazards as described above. In these embodiments, in use, the ECU 308 refrains from providing any haptic stimulus until a threshold quantity of hazards (indicative of the presence of an urban scene) within a predefined time period are detected. Other factors indicative of an urban scene, detectable by the one or more sensing means on the motorcycle include noise levels, quantity of other proximal vehicles and speed of other proximal vehicles. Predefined threshold values for those quantities can be defined and stored in a memory means in communication with the processing means 306.

In embodiments wherein safety mode is automatically enabled, the user may choose to override it and disable the mode.

### Sport mode:

When operating conventional, non-electric motorcycles, users rely on perceptible feedback, particularly from the motorcycle's engine, to ascertain how the motorcycle is handling and whether modification to operation thereof (such as a speed reduction or a decrease in lean angle) is required. A user can gauge a motorcycle's performance based on engine noise, how quickly the motorcycle is changing gear, how the steering feels, etc. However, the amount of perceptible vehicle performance feedback available to a user of an electric motorcycle is significantly reduced (compared to that of non-electric, conventional motorcycles). Electric motorcycles comprise a single gear and the engine is particularly quiet. Consequently, a user is less aware of how an electric motorcycle is handling and how close the electric motorcycle is to its operating limits. This usually results in a rider "playing it safe", which may negatively impact on the user's riding experience.

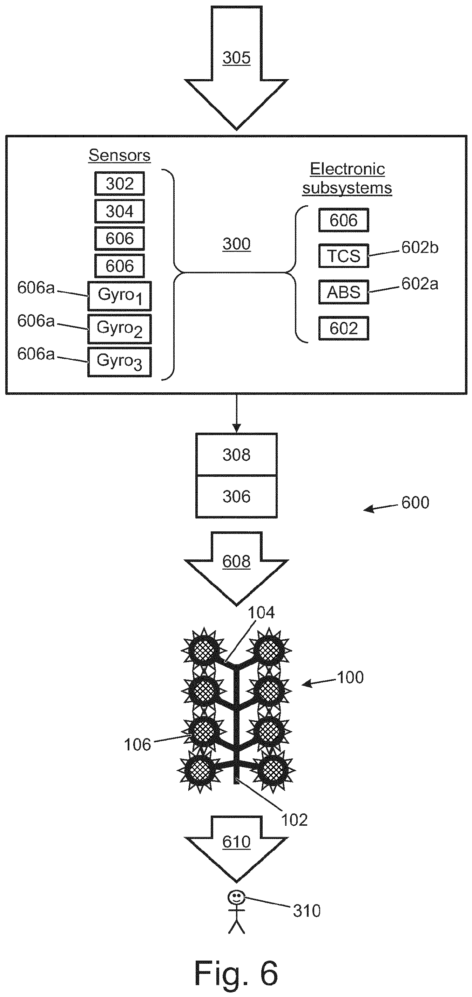

With reference to Figure 6, a haptic feedback system 600 operating in "sport mode" advantageously provides a user 310 with information indicative of a motorcycle's 300 handling and proximity to its limits by transmitting an oscillatory feedback configuration 610 via the haptic output means, which, in this embodiment, comprises a haptic device 10. In sport mode 600, parameters relating to the handling of the motorcycle 300 are monitored to determine whether the motorcycle 300 is approaching its operative limits. Motorcycle 300 comprises processing means, which in this embodiment comprises a processor 306. Motorcycle 300 also comprises an electronic control unit (ECU) 308 communicable with one or more electronic subsystems 602, 602a, 602b and/or one or more sensing means 302, 304, 606, 606a, 606b, 606c of the motorcycle 300. The processor 306 comprises input means arranged to receive one or more signals indicative of vehicle operational information from the sensing means and/or electronic subsystems. Different parameters are attributed a different importance weighting, to account for some parameters being more critical to motorcycle 300 failure than other parameters.

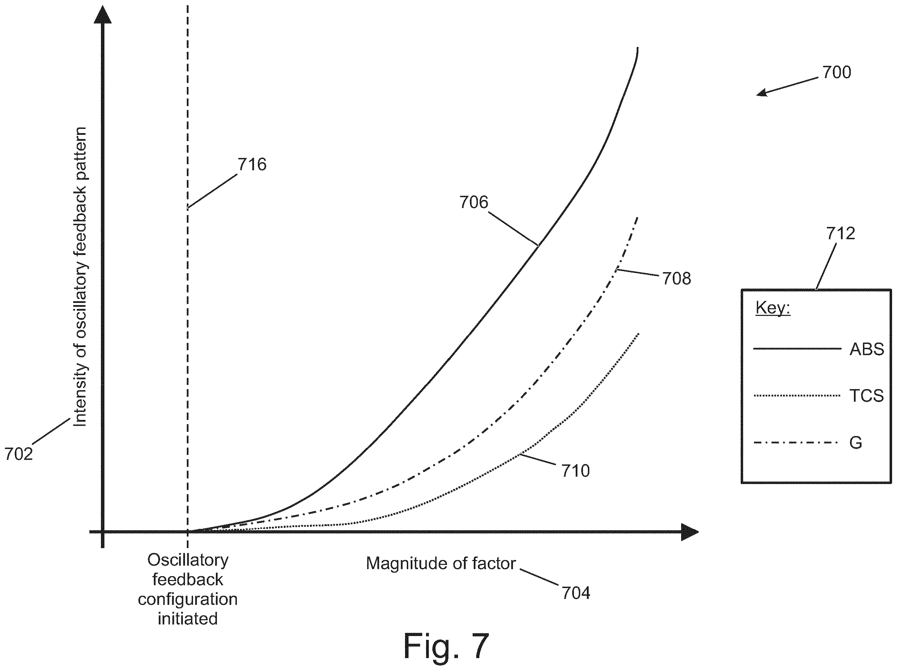

In some embodiments, ECU 308 monitors at least an anti-lock braking electronic subsystem (ABS) 602a and a traction control electronic subsystem (TCS) 602b of the motorcycle 300. ABS 602a is monitored to assess, amongst other things, how hard the motorcycle 300 is braking and whether the brakes are beginning to lock. TCS 602b is monitored to determine, amongst other things, whether the motorcycle is losing traction or whether one or both of the wheels might experience a wheel slip event. The ECU 308 may additionally monitors information pertaining to one or more sensors such as accelerometers or gyroscopes 606a on the motorcycle 300, to determine whether the motorcycle 300 is exceeding a predetermined critical G force, and/or whether the motorcycle 300 is exceeding a predetermined critical lean angle. With reference to Figure 7, each parameter is attributed a different degree of relevance, or weighting, to account for the fact that some parameters may be more critical to motorcycle 300 failure than other parameters. Figure 7 shows a plot 700 of intensity 702 of an oscillatory feedback configuration in dependence on magnitude 704 of monitored factors. As is clear by reference to key 712, line 706 shows the relationship between ABS and intensity of oscillatory feedback configuration, line 708 shows the relationship between TCS and intensity of oscillatory feedback configuration and line 710 shows the relationship between gyroscopic factors and intensity of oscillatory feedback configuration. In this embodiment, ABS 602a is considered the most important factor, followed by gyroscopic information 606a and then TCS 602b. Figure 7 also shows a threshold magnitude value (indicated by line 716) at or above which, in some embodiments, an oscillatory feedback configuration is provided. Below the threshold magnitude value 716, transmission of an oscillatory feedback configuration is inhibited.

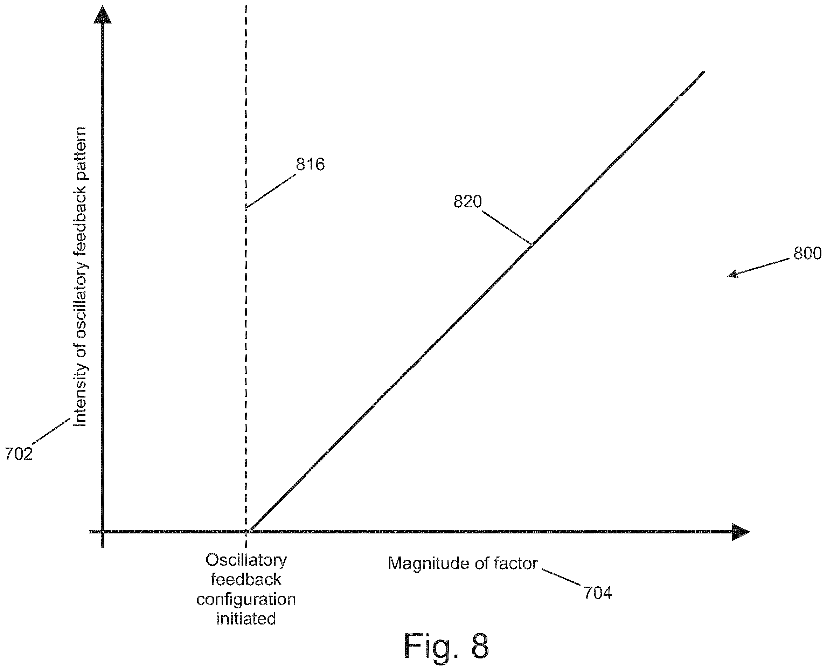

It will be appreciated that the parameters monitored or sensed by electronic systems 602 and sensing means 606 may be intrinsically linked. Amongst other relationships, it is noted that the larger a lean angle of the vehicle (relative to vertical), the smaller a contact area between a driving surface, such as a road, and a tyre of the motorcycle 300, resulting in reduced traction. Consequently, the processing means 306 is arranged to employ a balancing algorithm to account for linked parameters and parameter weighting, to determine an overall numerical severity factor. With reference to Figure 8, line 820 on plot 800, shows a relationship between magnitude 704 of an overall severity factor and intensity 702 of an oscillatory feedback configuration. In some embodiments, an oscillatory feedback configuration is not initiated until the magnitude of the severity factor 704 reaches or exceeds a predetermined threshold value, indicated by line 816. Below the predetermined threshold value 816, transmission of an oscillatory feedback configuration is inhibited.

With reference again to Figure 6, when the processing means 306 determines, using information monitored by the ECU 308, that the severity factor reaches or exceeds a predetermined threshold value 816, a signal 608 is generated, to cause the actuator (not shown) to operate the haptic output means 10 by driving one or more of the haptic spots 106, so as to provide the motorcycle user 310 with an oscillatory feedback configuration 610. The oscillatory feedback configuration 610 therefore provides the user 310 with a haptic stimulus indicating that the motorcycle 300 is approaching its limits. In some embodiments, the oscillatory feedback configuration 610 comprises a resonating vibration in all of the haptic spots 106, as shown in Figure 6. The resonating vibrations increase or decrease in intensity, the closer or further the motorcycle is to its limits, respectively.

When the haptic feedback system comprises a motorcycle helmet, in some embodiments, the user 310 is simultaneously provided with audio and/or visual feedback in addition to the haptic stimulus provided by oscillatory feedback configurations, hereinbefore described. In some embodiments, the audio signal simply comprises an audible alarm or a noise that the user associates with the motorcycle approaching its operational limits. In other embodiments, the audio signal comprises a verbal signal, indicating that the vehicle is approaching its operational limits. In some embodiments, the verbal signal specifies a specific parameter or parameters that is approaching a safe limit. A verbal signal may be accompanied by an audible alarm or noise. The visual feedback comprises information displayed on a head up display on an eye shield of the helmet, such that the displayed information is superimposed over a user's normal field of view. With reference to Figure 3, in some embodiments, the visual signal may comprise a symbol 523 on the head up display 500, positioned to be superimposed on the user's field of view. The symbol 523 may be indicative of a specific parameter, such as lean angle, that is approaching a safe limit. In some embodiments, the visual feedback may be accompanied by warning text 521. The head up display 500 may also provide a user with a variety of other environmental and/or operational information, such as a speed indication 510 and indications 512, 514, as to which modes, if any, are enabled.

Sport mode as hereinbefore described may be activated by a user and/or may be activated automatically, upon the haptic feedback system detecting one or more predetermined condition parameters. In some embodiments, a user may activate sport mode by pressing a button on the motorcycle, on the motorcycle apparel or on the helmet, which button causes a signal to be sent to the ECU 308 to enable sport mode and initiate wireless communication between the vehicle and the haptic output means 10. Alternatively, or additionally, the user may enable sport mode by means of a verbal command detected by a microphone on the helmet in communication with the haptic feedback system. In other embodiments, the motorcycle apparel may comprise sensing means, such as pressure sensors, accelerometers and/or gyroscopes, in communication with the haptic feedback system 600 and the user may enable sport mode by means of a physical gesture.

In some embodiments, the ECU 308 and processing means 306 may continually monitor signals from sensing means 302, 304, 606, 606a, 606b, 606c and/or electronic subsystems 602, 602a, 602b and sport mode may be enabled automatically when the processing means 306 determines that the motorcycle is operating in a particular way. Said particular way may be detected by means of one or more sensing means 302, 304, 606, 606a, 606b, 606c and/or electronic subsystems 602, 602a, 602b on the motorcycle sensing that the motorcycle 30 is travelling at a particular speed, or sensing unusual lean angles. In these embodiments, in use, the ECU 308 refrains from providing any haptic stimulus until it is determined that the motorcycle is operating in said particular way. Predefined rules as to what defines said particular way may be stored in a memory means in communication with the processing means 306.

In embodiments wherein sport mode is automatically enabled, the user may choose to override it and disable the mode.

The oscillatory feedback configuration 610, visible signal and audible signals are clearly distinguishable from the oscillatory feedback configuration 311 and visible and audible signals associated with safety mode. In some embodiments, sport mode is not used in combination with one or both of a head up display 500 and an audio system. In such embodiments, the oscillatory feedback configuration 610 is nevertheless distinguishable from any oscillatory feedback configurations 311 associated with safety mode.

### Euphoric mode:

Driving, riding or operating a motorcycle, can invoke an emotional response in a user. This is especially typical, although not exclusively, when the motorcycle is moving through an area of natural beauty, or on roads that are clear as far as the eye can see. Indeed, many motorcycle users choose to drive a motorcycle due to the sense of freedom and euphoria that they feel whilst driving. The present invention provides an oscillatory feedback configuration to initiate, impart or amplify an emotional response in a motorcycle driver, to enhance this sense of freedom and euphoria.

Euphoric mode comprises providing the user 310 with a haptic stimulus in the form of an oscillatory feedback configuration, in response to a signal indicating that the mode should be enabled. Specifically, depression of a button on the motorcycle 300, on the motorcycle apparel associated with the haptic output means or on the helmet may send an electrical signal to the ECU 308 prompting the ECU 308 to send a signal to the actuation means to drive one or more of the haptic spots 106 of the haptic output means 10. Alternatively, euphoric mode may be initiated by means of a voice command detected by a microphone in the helmet. In some embodiments, euphoric mode may be enabled automatically, upon the haptic feedback system detecting that the user is in a predetermined type of environment, such as a vastly open space, an environment near a relatively large body of water or an area or an area heavily populated by plants and greenery. Briefly, sensing means on the motorcycle, such as a front system 302 comprising one or both of a camera and a radar and a rear system 304 comprising one or both of a camera and a radar, and/or sensing means, such as cameras, on the helmet or protective vehicle suit, monitor the environment in which the user is driving. If the cameras or other sensing means detect a predetermined amount of light of wavelengths in the green to blue ranges of visible light, euphoric mode may be automatically initiated. In some embodiments, the haptic feedback system may be able to differentiate between types of scenery, by means of a memory means pre-programmed with information about expected light signals in different types of environment.

In some embodiments, euphoric mode is automatically enabled in dependence on sensed biometrics of the user, such as heart rate, perspiration rate or core temperature.

The oscillatory feedback configuration employed by the haptic feedback system in euphoric mode may comprise operating one or more of the haptic spots 106 output a frequency pattern. The frequency may comprise an audio frequency. The frequency output may be optimised to a frequency more noticeable to the user. The output frequency may comprise a harmonic configuration. The output frequency pattern may be provided by playing a song or playlist of songs through the one or more haptic spots' respective speakers. In some embodiments, the haptic feedback system may play different music genres, in dependence on the type of environment that the user is in. Classical music may be played when it is detected that the user is near a large body of water, or rock music may be played when it is detected that the user is descending down a steep gradient. In some embodiments, a user can pre-program the system to play their own chosen genres of music, or their own chosen songs or playlists of songs, in response to different scenery. In some embodiments, a frequency output

In some embodiments, additional haptic spots 106 are provided in additional locations, such as down a user's arms and/or legs. In those embodiments, euphoric mode may additionally or alternatively comprise driving haptic spots that are in contact with or proximal to the user's arms and/or legs, respectively so as to simulate the feeling of wind or air blowing up the user's arms and/or legs.

It will be appreciated that safety, sport and euphoric modes each have distinct applications and are best suited to different environments. Sport mode is particularly useful in a track environment, whilst safety mode is particularly suited to busy urban environments - environments in which sport mode is not likely to be necessary. Nevertheless, safety mode can be useful in a variety of environments and it is to be appreciated that both safety mode and sport mode can be simultaneously activated. Indeed any number of different modes may be complementary to one another and it is to be appreciated the modes hereinbefore described may be used alone or in combination with one or more other modes.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method of providing haptic stimulus to a user during operation of a vehicle (300), the method comprising:
receiving at least one electrical signal (305) representative of operational information;
determining an oscillatory feedback configuration in dependence on said at least one electrical signal (305); and
outputting a signal (309, 608) to cause a haptic output means (10) to output the determined oscillatory feedback configuration (311, 610) to a user (310),
wherein said haptic output means (10) is associated with apparel (200, 250) for wearing by the user (310),
**characterised in that** said operational information comprises at least one of:
information relating to an anti-lock braking system (706); and
information relating to a traction control system (708).

2. The method of claim 1, wherein said operational information comprises information relating to one or more accelerometers or gyroscopes (606a, 606b, 606c) of the vehicle (300).

3. The method of claim 1 or claim 2 wherein said determining comprises comparing said operational information to at least one corresponding threshold value (716) and inhibiting said outputting, when the operational information is below said threshold value (716).

4. The method of any preceding claim, wherein said determining comprises:
determining an overall severity factor (820) value in dependence on said operational information; and
comparing the overall severity factor (820) value to a threshold overall severity factor value (816),
and the method comprises inhibiting said outputting, when the severity factor (820) value is below the threshold overall severity factor value (816).

5. The method of any preceding claim comprising receiving at least one electrical signal (305) representative of environmental information, wherein said environmental information comprises information indicative of a detected driving hazard (410, 506).

6. The method of claim 5, wherein said determining comprises determining a distance between the vehicle (300) and the detected driving hazard (410, 506).

7. The method of claim 5 or claim 6, wherein said determining comprises determining the severity factor in dependence on one or more characteristics of said detected driving hazard (410, 506).

8. The method of any of claims 5 to 7, wherein said detected driving hazard (410, 506) is an obstacle in a driving path of the vehicle (300).

9. The method of any of claims 5 to 7, wherein said detected driving hazard (410, 506) is an object in a blind spot of the user (310).

10. The method of any preceding claim wherein said electrical signal (305) comprises a user initiated signal.

11. The method of any of claims 1 to 10 comprising outputting at least one of:
a visible notification (502, 504, 508, 521, 523) on a user display (500); and
an audible notification via a user sound system.

12. A controller for providing haptic stimulus during operation of a vehicle (300), the controller comprising:
input means for receiving at least one electrical signal (305) indicative of vehicle (300) operational information;
processing means (306) for:
determining an oscillatory feedback configuration (311, 610) in dependence on the at least one electrical signal (305);
output means for providing a signal (309, 608) to cause a haptic output means (10) to output the determined oscillatory feedback configuration (311, 610) to the user (310), and
wherein said haptic output means (10) is associated with apparel (200, 250) for wearing by the user (310), and
**characterised in that** said operational information comprises at least one of:
information relating to an anti-lock braking system (706); and
information relating to a traction control system (708).

13. The controller of claim 12, wherein said operational information comprises information relating to one or more accelerometers and/or gyroscopes of the vehicle (710).

14. The controller of any of claim 12 or 13, comprising input means for receiving at least one electrical signal (305) indicative of environmental information, wherein said environmental information comprises presence of a driving hazard (410, 506).

15. The controller of claim 14, wherein said processing means (306) is arranged to determine a distance between said driving hazard (410, 506) and the vehicle (300).

16. The controller of any of claims 14 or 15, wherein said processing means (306) is arranged to determine a severity factor in dependence on one or more characteristics of said driving hazard (410, 506).

17. The controller of any of claims 14 to 16, wherein said driving hazard (410, 506) is an obstacle in a driving path of the vehicle (300).

18. The controller of any of any of claims 14 to 16, wherein said driving hazard (410, 506) is an object in a blind spot of the user.

19. A vehicle (300) comprising the controller of any of claims 12 to 18.

20. Computer software which, when executed by a computer, is arranged to perform a method according to any of claims 1 to 11.

## Patentansprüche

1. Verfahren zum Bereitstellen eines haptischen Reizes an einen Benutzer während eines Betriebs eines Fahrzeugs (300), das Verfahren umfassend:
Empfangen von mindestens einem elektrischen Signal (305), das Betriebsinformationen darstellt;
Bestimmen einer oszillierenden Rückkopplungskonfiguration in Abhängigkeit von dem mindestens einen elektrischen Signal (305); und
Ausgeben eines Signals (309, 608), um ein haptisches Ausgabemittel (10) zu veranlassen, die bestimmte oszillatorische Rückkopplungskonfiguration (311, 610) an einen Benutzer (310) auszugeben,
wobei das haptische Ausgabemittel (10) mit einer Bekleidung (200, 250) zum Tragen durch den Benutzer (310) verbunden ist,
**dadurch gekennzeichnet, dass** die Betriebsinformationen mindestens eines umfassen von:
Informationen, die sich auf ein Antiblockiersystem (706) beziehen; und
Informationen, die sich auf ein Antriebssteuerungssystem (708) beziehen.

2. Verfahren nach Anspruch 1, wobei die Betriebsinformationen Informationen umfassen, die sich auf einen oder mehrere Beschleunigungsmesser oder Gyroskope (606a, 606b, 606c) des Fahrzeugs (300) beziehen.

3. Verfahren nach Anspruch 1 oder 2, wobei das Bestimmen das Vergleichen der Betriebsinformationen mit mindestens einem entsprechenden Schwellenwert (716) und ein Verhindern des Ausgebens umfasst, wenn die Betriebsinformationen unter dem Schwellenwert (716) liegen.

4. Verfahren nach einem der vorstehenden Ansprüche, wobei das Bestimmen umfasst:
Bestimmen eines Gesamtwerts eines Schweregradfaktors (820) in Abhängigkeit von den Betriebsinformationen; und
Vergleichen des Gesamtwerts des Schweregradfaktors (820) mit einem Schwellengesamtwert des Schweregradfaktors (816),
und das Verfahren das Verhindern des Ausgebens umfasst, wenn der Wert des Schweregradfaktors (820) unter dem Schwellengesamtwert des Schweregradfaktors (816) liegt.

5. Verfahren nach einem der vorstehenden Ansprüche, umfassend das Empfangen von mindestens einem elektrischen Signal (305), das Umgebungsinformationen darstellt, wobei die Umgebungsinformationen Informationen umfassen, die eine erkannte Gefahr (410, 506) beim Fahren angeben.

6. Verfahren nach Anspruch 5, wobei das Bestimmen das Bestimmen eines Abstands zwischen dem Fahrzeug (300) und der erkannten Gefahr (410, 506) beim Fahren umfasst.

7. Verfahren nach Anspruch 5 oder 6, wobei das Bestimmen das Bestimmen des Schweregradfaktors in Abhängigkeit von einer oder mehreren Eigenschaften der erkannten Gefahr (410, 506) beim Fahren umfasst.

8. Verfahren nach einem der Ansprüche 5 bis 7, wobei die erkannte Gefahr (410, 506) beim Fahren ein Hindernis auf einem Fahrweg des Fahrzeugs (300) ist.

9. Verfahren nach einem der Ansprüche 5 bis 7, wobei die erkannte Gefahr (410, 506) beim Fahren ein Objekt in einem toten Winkel des Benutzers (310) ist.

10. Verfahren nach einem der vorstehenden Ansprüche, wobei das elektrische Signal (305) ein von dem Benutzer initiiertes Signal umfasst.

11. Verfahren nach einem der Ansprüche 1 bis 10, umfassend das Ausgeben von mindestens einer von:
einer sichtbaren Benachrichtigung (502, 504, 508, 521, 523) auf einem Benutzerdisplay (500); und
einer akustischen Benachrichtigung über ein Benutzer-Soundsystem.

12. Steuereinrichtung zum Bereitstellen des haptischen Reizes während des Betriebs eines Fahrzeugs (300), die Steuereinrichtung umfassend:
ein Eingabemittel zum Empfangen von mindestens einem elektrischen Signal (305), das Betriebsinformationen des Fahrzeugs (300) angibt;
ein Verarbeitungsmittel (306) zum:
Bestimmen einer oszillierenden Rückkopplungskonfiguration (311, 610) in Abhängigkeit von dem mindestens einen elektrischen Signal (305);
ein Ausgabemittel zum Bereitstellen eines Signals (309, 608), um ein haptisches Ausgabemittel (10) zu veranlassen, die bestimmte oszillatorische Rückkopplungskonfiguration (311, 610) an den Benutzer (310) auszugeben, und
wobei das haptische Ausgabemittel (10) mit Bekleidung (200, 250) zum Tragen durch den Benutzer (310) verbunden ist und
**dadurch gekennzeichnet, dass** die Betriebsinformationen mindestens eines umfassen von:
Informationen, die sich auf ein Antiblockiersystem (706) beziehen; und
Informationen, die sich auf ein Antriebssteuerungssystem (708) beziehen.

13. Steuereinrichtung nach Anspruch 12, wobei die Betriebsinformationen Informationen umfassen, die sich auf einen oder mehrere Beschleunigungsmesser und/oder Gyroskope des Fahrzeugs (710) beziehen.

14. Steuereinrichtung nach einem der Ansprüche 12 oder 13, umfassend das Eingabemittel zum Empfangen von mindestens einem elektrischen Signal (305), das Umgebungsinformationen angibt, wobei die Umgebungsinformationen ein Vorhandensein einer Gefahr (410, 506) beim Fahren umfassen.

15. Steuereinrichtung nach Anspruch 14, wobei das Verarbeitungsmittel (306) eingerichtet ist, um einen Abstand zwischen der Gefahr (410, 506) beim Fahren und dem Fahrzeug (300) zu bestimmen.

16. Steuereinrichtung nach einem der Ansprüche 14 oder 15, wobei das Verarbeitungsmittel (306) eingerichtet ist, um einen Schweregradfaktor in Abhängigkeit von einer oder mehreren Eigenschaften der Gefahr (410, 506) beim Fahren zu bestimmen.

17. Steuereinrichtung nach einem der Ansprüche 14 bis 16, wobei die Gefahr (410, 506) beim Fahren ein Hindernis auf einem Fahrweg des Fahrzeugs (300) ist.

18. Steuereinrichtung nach einem der Ansprüche 14 bis 16, wobei die Gefahr (410, 506) beim Fahren ein Objekt in einem toten Winkel des Benutzers ist.

19. Fahrzeug (300), umfassend die Steuereinrichtung nach einem der Ansprüche 12 bis 18.

20. Computersoftware, die, wenn sie durch einen Computer ausgeführt wird, eingerichtet ist, um ein Verfahren nach einem der Ansprüche 1 bis 11 durchzuführen.

## Revendications

1. Procédé de fourniture d'une stimulation haptique à un utilisateur pendant le fonctionnement d'un véhicule (300), le procédé comprenant :
la réception d'au moins un signal électrique (305) représentatif d'informations de fonctionnement ;
la détermination d'une configuration de rétroaction oscillatoire en dépendance dudit au moins un signal électrique (305) ; et
la sortie d'un signal (309, 608) pour amener un moyen de sortie haptique (10) à délivrer en sortie la configuration de rétroaction oscillatoire déterminée (311, 610) à un utilisateur (310),
dans lequel ledit moyen de sortie haptique (10) est associé à un vêtement (200, 250) destiné à être porté par l'utilisateur (310),
**caractérisé en ce que** lesdites informations de fonctionnement comprennent au moins l'une parmi :
des informations se rapportant à système de freinage antiblocage (706) ; et
des informations se rapportant à un système de commande de traction (708).

2. Procédé selon la revendication 1, dans lequel lesdites informations de fonctionnement comprennent des informations se rapportant à un ou plusieurs accéléromètres ou gyroscopes (606a, 606b, 606c) du véhicule (300).

3. Procédé selon la revendication 1 ou la revendication 2 dans lequel ladite détermination comprend la comparaison desdites informations de fonctionnement à au moins une valeur seuil correspondante (716) et l'inhibition de ladite sortie, lorsque les informations de fonctionnement sont inférieures à ladite valeur seuil (716).

4. Procédé selon l'une quelconque revendication précédente, dans lequel ladite détermination comprend :
la détermination d'une valeur de facteur de gravité global (820) en dépendance desdites informations de fonctionnement ; et
la comparaison de la valeur de facteur de gravité global (820) à une valeur seuil de facteur de gravité global (816),
et le procédé comprend l'inhibition de ladite sortie, lorsque la valeur de facteur de gravité (820) est inférieure à la valeur seuil de facteur de gravité global (816).

5. Procédé selon l'une quelconque revendication précédente comprenant la réception d'au moins un signal électrique (305) représentatif d'informations environnementales, dans lequel lesdites informations environnementales comprennent des informations indiquant un danger de conduite détecté (410, 506).

6. Procédé selon la revendication 5, dans lequel ladite détermination comprend la détermination d'une distance entre le véhicule (300) et le danger de conduite détecté (410, 506).

7. Procédé selon la revendication 5 ou la revendication 6, dans lequel ladite détermination comprend la détermination du facteur de gravité en dépendance d'une ou plusieurs caractéristiques dudit danger de conduite détecté (410, 506).

8. Procédé selon l'une quelconque des revendications 5 à 7, dans lequel ledit danger de conduite détecté (410, 506) est un obstacle dans une trajectoire de conduite du véhicule (300).

9. Procédé selon l'une quelconque des revendications 5 à 7, dans lequel ledit danger de conduite détecté (410, 506) est un objet dans un angle mort de l'utilisateur (310).

10. Procédé selon l'une quelconque revendication précédente dans lequel ledit signal électrique (305) comprend un signal initié par l'utilisateur.

11. Procédé selon l'une quelconque des revendications 1 à 10 comprenant la sortie d'au moins l'une parmi :
une notification visible (502, 504, 508, 521, 523) sur un affichage utilisateur (500) ; et
une notification audible par l'intermédiaire d'un système sonore utilisateur.

12. Dispositif de commande permettant de fournir une stimulation haptique pendant le fonctionnement d'un véhicule (300), le dispositif de commande comprenant :
un moyen d'entrée permettant de recevoir au moins un signal électrique (305) indiquant des informations de fonctionnement du véhicule (300) ;
un moyen de traitement (306) pour :
la détermination d'une configuration de rétroaction oscillatoire (311, 610) en dépendance de l'au moins un signal électrique (305) ;
permettre à un moyen de sortie de fournir un signal (309, 608) pour amener un moyen de sortie haptique (10) à délivrer en sortie la configuration de rétroaction oscillatoire déterminée (311, 610) à l'utilisateur (310), et
dans lequel ledit moyen de sortie haptique (10) est associé à un vêtement (200, 250) destiné à être porté par l'utilisateur (310), et
**caractérisé en ce que** lesdites informations de fonctionnement comprennent au moins l'une parmi :
des informations se rapportant à système de freinage antiblocage (706) ; et
des informations se rapportant à un système de commande de traction (708).

13. Dispositif de commande selon la revendication 12, dans lequel lesdites informations de fonctionnement comprennent des informations se rapportant à un ou plusieurs accéléromètres et/ou gyroscopes du véhicule (710).

14. Dispositif de commande selon l'une quelconque parmi la revendication 12 ou 13, comprenant un moyen d'entrée permettant de recevoir au moins un signal électrique (305) indiquant des informations environnementales, dans lequel lesdites informations environnementales comprennent la présence d'un danger de conduite (410, 506).

15. Dispositif de commande selon la revendication 14, dans lequel ledit moyen de traitement (306) est agencé pour déterminer une distance entre ledit danger de conduite (410, 506) et le véhicule (300).

16. Dispositif de commande selon l'une quelconque des revendications 14 ou 15, dans lequel ledit moyen de traitement (306) est agencé pour déterminer un facteur de gravité en dépendance d'une ou plusieurs caractéristiques dudit danger de conduite (410, 506).

17. Dispositif de commande selon l'une quelconque des revendications 14 à 16, dans lequel ledit danger de conduite (410, 506) est un obstacle dans une trajectoire de conduite du véhicule (300).

18. Dispositif de commande selon l'une quelconque des revendications 14 à 16, dans lequel ledit danger de conduite (410, 506) est un objet dans un angle mort de l'utilisateur.

19. Véhicule (300) comprenant le dispositif de commande selon l'une quelconque des revendications 12 à 18.

20. Logiciel d'ordinateur qui, lorsqu'il est exécuté par un ordinateur, est agencé pour mettre en oeuvre un procédé selon l'une quelconque des revendications 1 à 11.
